# EUROPÄISCHE PATENTANMELDUNG

(11) **EP 1 908 342 A1**
(43) Veröffentlichungstag der Anmeldung: **09.04.2008**
(21) Anmeldenummer: 07019068.1
(22) Anmeldetag: 27.09.2007
(51) Int. Cl.: A01D 78/12

(54) **Heuwerbungsmaschine**

(30) Priorität: 02.10.2006 DE 202006015108 U
(71) Anmelder: Alois Pöttinger Maschinenfabrik Ges. m.b.H., 4710 Grieskirchen (AT)
(72) Erfinder: Mairhuber, Josef, 4722 Peuerbach (AT); Schremmer, Woflgang Ing., 4062 Thening (AT)
(74) Vertreter: Thoma, Michael

(57) **Zusammenfassung**

Die vorliegende Erfindung betrifft eine Heuwerbungsmaschine mit zumindest einem Rechkreisel (2), der zumindest einen Recharm (4) aufweist, der um eine Rechkreiselachse (3) umlaufend antreibbar ist und mittels einer Drehlagerung (13) um seine Längsachse drehbar gelagert ist, wobei mit dem Recharm ein Steuerhebel (7) drehfest verbunden ist, der mit einer Kurvenbahn in Eingriff bringbar ist und die Drehstellung des Recharms in Abhängigkeit der Umlaufstellung des Recharms um die Rechkreiselachse steuert.

Erfindungsgemäß wird vorgeschlagen, eine innere Lagerstelle (15) des Recharms auf die innere Seite der Steuerhebel zu versetzen. Innere Seite meint dabei die Seite des Steuerhebels, die den am Recharm befestigten Rechzinken abgewandt ist bzw. näher an der Rechkreiselachse liegt als die auskragenden äußeren Enden der Recharme, an denen die Rechzinken befestigt sind. Vorteilhafterweise wird hierdurch der Stand der inneren Lagerstelle zu einer weiteren, äußeren Lagerstelle des jeweiligen Recharms vergrößert, wodurch eine steifere und stabilere Lagerung der Recharme erreicht werden kann.

## Beschreibung

Die vorliegende Erfindung betrifft eine Heuwerbungsmaschine, insbesondere einen Kreiselschwader, mit zumindest einem Rechkreisel, der zumindest einen Recharm aufweist, der um eine Rechkreiselachse umlaufend antreibbar ist und mittels einer Drehlagerung um seine Längsachse drehbar gelagert ist, wobei mit dem Recharm ein Steuerhebel drehfest verbunden ist, der mit einer Kurvenbahn in Eingriff bringbar ist und die Drehstellung des Recharms in Abhängigkeit der Umlaufstellung des Recharms um die Rechkreiselachse steuert.

Kreiselschwader besitzen regelmäßig einen oder mehrere Rechkreisel, die in ihrer Betriebsstellung um eine im wesentlichen aufrechte Rechkreiselachse umlaufen. Dabei umfasst jeder Rechkreisel üblicherweise mehrere Recharme, die sternförmig von der Nabe des Rechkreisels auskragen und an ihren auskragenden Enden Rechzinken tragen. Um das Erntegut zu einem Schwad zusammenzurechen, werden die einzelnen Recharme bei Ihrem Umlauf um die Rechkreiselachse zyklisch um ihre eigene Längsachse verdreht, wodurch die Rechzinken in einem bestimmten Segment der Umlaufbahn nach unten gerichtet sind, um auf dem Boden liegendes Erntegut zu erfassen, während sie in einem anderen Segment des Umlaufkreises nach oben geklappt sind, um über das Erntegut hinweg zu streichen. Diese zyklische Drehbewegung der Recharme in Abhängigkeit ihrer Umlaufbewegung wird üblicherweise über Steuerhebel bewerkstelligt, die an dem inneren, nabenseitigen Ende der Recharme mit letzteren drehfest verbunden sind und auf einer Kurvenbahn- bzw. Steuerbahn ablaufen, die sich um die Rechkreiselachse herum erstreckt.

Die Lagerung der Recharme unterliegt hierbei starken Beanspruchungen. Einerseits verursachen die äußeren Belastungen an den Rechzinken, wenn diese mit dem Erntegut in Berührung kommen bzw. über den Boden kratzen, hohe Reaktionskräfte in den Lagerstellen der Recharme. Zum anderen werden über die bisweilen recht kurzen Steuerhebel bei hohen Umlaufgeschwindigkeiten der Rechkreisel durchaus hohe Momente in die Recharme eingeleitet, die wiederum entsprechende Lagerbeanspruchungen mit sich bringen. Erschwerend kommt hierbei hinzu, dass durch die Anordnung der Steuerhebel an den inneren Enden der Recharme die Anordnung der Lager behindert wird, die dort unter recht beengten Platzverhältnissen zu erfolgen hat. Zudem darf die Lageranordnung die Beweglichkeit der Steuerhebel natürlich nicht beschränken, damit diese ausreichend Bewegungsfreiheit haben. Andererseits soll die Lageranordnung derart getroffen werden, dass die Montage- und Wartungsfreundlichkeit der Recharm- und Steuerhebelanordnung möglichst hoch ist. Insbesondere ist es wünschenswert, nicht die gesamte Nabenteller-und Lagergehäuseanordnung auseinanderbauen zu müssen, um einen Recharm bzw. den daran drehfest montierten Steuerhebel austauschen bzw. reparieren zu können.

Hiervon ausgehend liegt der vorliegenden Erfindung die Aufgabe zugrunde, eine verbesserte Heuwerbungsmaschine der genannten Art zu schaffen, die Nachteile des Standes der Technik vermeidet und letzteren in vorteilhafter Weise weiterbildet. Vorzugsweise soll eine stabile und steife Lageranordnung für die Recharme geschaffen werden, die einen einfachen Ein- und Ausbau einzelner Recharme bzw. Steuerhebel erlaubt.

Erfindungsgemäß wird diese Aufgabe durch eine Heuwerbungsmaschine gemäß Anspruch 1 gelöst. Bevorzugte Ausgestaltungen der Erfindung sind Gegenstand der abhängigen Ansprüche.

Erfindungsgemäß wird also vorgeschlagen, eine innere Lagerstelle des Recharms auf die innere Seite der Steuerhebel zu versetzen. Innere Seite meint dabei die Seite des Steuerhebels, die den am Recharm befestigten Rechzinken abgewandt ist bzw. näher an der Rechkreiselachse liegt als die auskragenden äußeren Enden der Recharme, an denen die Rechzinken befestigt sind. Vorteilhafterweise wird hierdurch der Stand der inneren Lagerstelle zu einer weiteren, äußeren Lagerstelle des jeweiligen Recharms vergrößert, wodurch eine steifere und stabilere Lagerung der Recharme erreicht werden kann. Zudem ist die Anordnung der inneren Lagerstelle auf der den Rechzinken abgewandten inneren Seite der Steuerhebel auch hinsichtlich der Montage- bzw. Wartungsfreundlichkeit vorteilhaft, da hierdurch die Zugänglichkeit und Montierbarkeit der Steuerhebel von außen her nicht durch die Lagerstelle behindert wird. Soweit die Recharme oftmals nicht tatsächlich im mathematisch-geometrischen Sinne radial zur Rechkreiselachse angeordnet sind, sondern bezüglich eines gedachten, kleineren Kreises um die Rechkreiselachse tangential angeordnet sind, meint die vorgenannte "innere" Seite der Steuerhebel nicht zwangsweise die tatsächlich radial weiter innen liegende Seite der Steuerhebel; gemeint ist vielmehr die den am auskragenden Ende der Recharme angeordneten Rechzinken abgewandte Seite der Steuerhebel. Bei insgesamter Betrachtung eines Recharms liegt dessen inneres Ende ungeachtet der vorgenannten Problematik der nicht tatsächlich radialen Anordnung natürlich immer noch weiter innen an der Rechkreiselachse als der auskragende, die Rechzinken tragende äußere Endabschnitt des Recharms.

Insbesondere kann in vorteilhafter Weiterbildung der Erfindung zwischen der vorgenannten inneren Lagerstelle und dem Recharm bzw. dem daran befestigten Steuerhebel eine lösbare Steckverbindung vorgesehen sein, die es erlaubt, den Recharm zusammen mit dem daran befestigten Steuerhebel, ggf. nach Lösen der äußeren Lagerstelle und daran befestigter Verblendungen, den Recharm zusammen mit dem daran befestigten Steuerhebel nach außen aus der inneren Lagerstelle herauszuziehen bzw. umgekehrt von außen her den Recharm mit dem daran befestigten Steuerhebel in die innere Lagerstelle einzustecken. Dies vereinfacht die Montage beträchtlich, da hierzu nicht die gesamte Naben- bzw. Nabenteller- und Gehäuseanordnung des Rechkreisels auseinandergebaut werden muss, um zunächst den Steuerhebel vom Recharm abbauen und dann den Recharm demontieren zu können.

Durch die Anordnung der inneren Lagerstelle auf der vorgenannten inneren Seite des Steuerhebels ist es in einfacher Weise möglich, in Weiterbildung der Erfindung auf beiden Seiten des Steuerhebels Lagerstellen zur Lagerung des Recharms vorzusehen. Der Steuerhebel und damit der Einleitpunkt für die von dem Steuerhebel her rührenden Kräfte liegt dementsprechend zwischen den beiden Lagerstellen der Drehlagerung, wodurch eine besonders steife und stabile Lagerung der Recharme möglich ist. Vorteilhafterweise liegt die äußere Lagerstelle von dem Steuerhebel deutlich beabstandet vorzugsweise am äußeren Rand eines tellerförmigen Trägers bzw. Lagergehäuses, an dem die Recharme des Rechkreisels befestigt sind und der sich um die Rechkreiselachse drehen kann. Hierdurch wird ein maximaler Lagerabstand erreicht.

In vorteilhafter Weiterbildung der Erfindung ist die innere Lagerstelle hingegen in unmittelbarer Nachbarschaft an den jeweiligen Steuerhebel angrenzend angeordnet, so dass im Sinne eines günstigen Kraftflusses eine direkte Kraftableitung der von den Steuerhebeln her eingeleiteten Kräfte erfolgen kann. Vorteilhafterweise ist die innere Lagerstelle unmittelbar bei dem Steuerhebel angeordnet.

In Weiterbildung der Erfindung kann der Steuerhebel selbst an der inneren Lagerstelle drehbar gelagert sein. Alternativ hierzu wäre es auch möglich, dass der Recharm über die Befestigungsstelle des Steuerhebels hinaus ein Stück weit vorsteht und mit diesem vorstehenden, inneren Endabschnitt alleine an der inneren Lagerstelle abgestützt ist. Die zuvor genannte Anordnung, gemäß der auch der Steuerhebel selbst an der inneren Lagerstelle abgestützt ist, verbessert jedoch die Kraftableitung bezüglich der vom Steuerhebel eingeleiteten Kräfte bzw. kann die Belastung der Verbindungsstelle zwischen Recharm und Steuerhebel reduziert werden.

Nach einer vorteilhaften Ausführung der Erfindung ist der Steuerhebel mit einem Steuerhebel-Lagerstück verbunden, das starr mit dem Recharm verbindbar ist und einen Drehlagerabschnitt aufweist, der an der genannten inneren Lagerstelle der Drehlagerung des Recharms abgestützt ist.

Das genannte Steuerhebel-Lagerstück kann grundsätzlich verschieden ausgebildet sein. Nach einer vorteilhaften Ausführung der Erfindung kann es zumindest abschnittsweise eine Hülse bilden, die den vorzugsweise rohr- und/oder wellenförmigen Recharm umgreift. Nach einer vorteilhaften Ausführung der Erfindung kann dieses hülsenförmige Lagerstück einen stirnseitigen Fortsatz besitzen, der in der inneren Lagerstelle sitzt, wodurch der Recharm über die Drehlagerung des Steuerhebels ebenfalls an der inneren Lagerstelle drehbar gelagert ist.

Die Lagerstellen der Recharmlagerung können grundsätzlich verschieden angeordnet werden, beispielsweise alle an einem gemeinsamen Träger befestigt sein oder einzeln oder gruppenweise an verschiedenen Trägern angeordnet sein. In Weiterbildung der Erfindung sind die inneren Lagerstellen an einem vorzugsweise etwa tellerförmigen, gemeinsamen Träger befestigt, der um die Rechkreiselachse drehbar gelagert ist und ggf. auch als Antriebsstück fungieren kann, beispielsweise mit einem Rechkreisel-Antriebsgetriebe bzw. dessen Abtriebsstück wirkverbunden sein kann.

Die äußeren Lagerstellen für die Recharme können grundsätzlich an demselben, genannten tellerförmigen Träger befestigt sein. In Weiterbildung der Erfindung können die äußeren Lagerstellen jedoch auch an einem separaten Rechkreisel-Gehäusestück befestigt sein, das mit dem vorgenannten tellerförmigen Träger zusammen eine Nabenstruktur bildet, an der die Recharme des Rechkreisels aufgehängt sind.

Vorteilhafterweise sind dabei die äußeren Lagerstellen lösbar, so dass die Recharme nach Lösen der äußeren Lagerstellen einfach mitsamt der Steuerhebel nach außen herausgezogen werden können, wobei sich die Steckverbindung an den inneren Lagerstellen löst.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Kreiselschwaders in einer Ausführung mit einem Rechkreisel,
- Fig. 2:: eine ausschnittsweise, schematische Draufsicht auf den Rechkreisel des Kreiselschwaders aus Fig. 1, die die Lagerung der Recharme und der daran befestigten Steuerhebel zeigt, und
- Fig. 3:: eine ausschnittsweise, perspektivische Darstellung eines tellerförmigen Trägers in Form eines Lagerrings, an dem die inneren Lagerstellen der Recharme aus Fig. 2 befestigt sind.

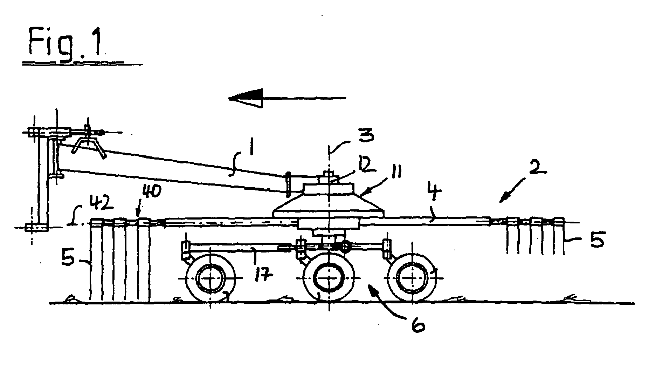

Der in Figur 1 beispielhaft gezeigte Kreiselschwader 1 besitzt in an sich bekannter Weise einen Maschinenrahmen 1, mit dem der Kreiselschwader an einen nicht eigens dargestellten Schlepper ankuppelbar ist. An dem Maschinenrahmen 1 ist in der gezeichneten Ausführung ein einzelner Rechkreisel 2 um eine in der Arbeitsstellung im wesentlichen vertikale Rechkreiselachse 3 rotatorisch antreibbar gelagert. Der nicht im Detail dargestellte Kreiselantrieb kann dabei mechanisch, hydraulisch oder elektrisch erfolgen. Vorteilhafterweise ist ein Winkelgetriebe mit einem Verbindungsrohr bzw. einem Zentralrohr zum Kreisel und Kreiselfahrwerk vorgesehen.

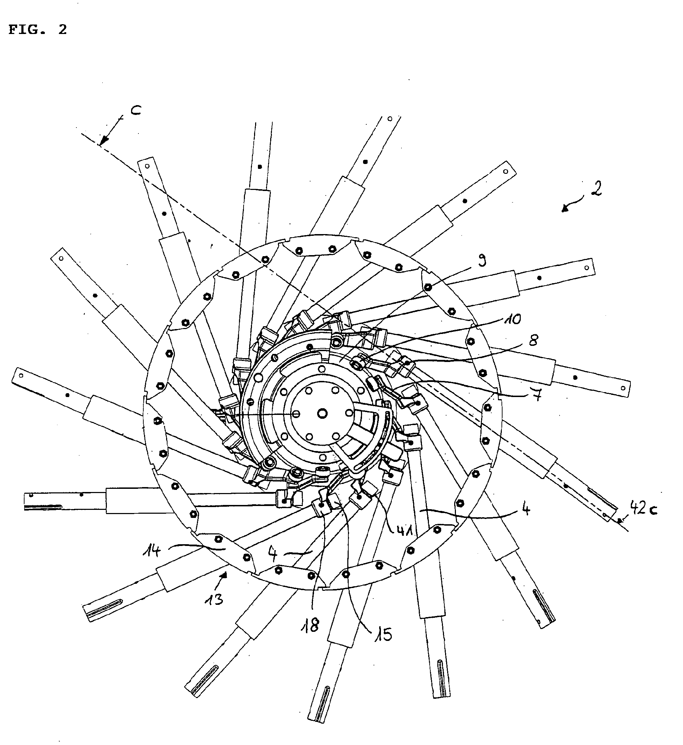

Wie Figur 1 und 2 zeigen, besitzt der Rechkreisel 2 eine Vielzahl von - grob gesprochen - radial zur Rechkreiselachse 3 angeordnete Recharme 4, an deren auskragenden Enden 40 Rechzinken 5 befestigt sind. Die Recharme 4 werden dabei auf ihrer Umlaufbahn um die Rechkreiselachse 3 um ihre eigene Längsachse 42 verdreht, so dass die daran befestigten Rechzinken 5 nach oben und unten geschwenkt werden können, um einerseits zum Zusammenrechen des Ernteguts dicht über den Boden zu streifen und andererseits im Bereich des Schwads nach oben zu klappen, um das Erntegut in dem genannten Schwad abzulegen. Wie Figur 1 andeutet, werden die Rechzinken 5 in dem in Fahrtrichtung hinten liegenden Sektor der Umlaufbahn nach oben und im vorne liegenden Sektor der Umlaufbahn nach unten geklappt.

Um die vorgenannte Schwenkbewegung der Rechzinken 5 und die hierfür erforderliche Drehbewegung der Recharme 4 um deren Längsachse 42 zu erreichen, sind an den inneren Enden 41 der Recharme 4 Steuerhebel 7 befestigt, die mit den Recharmen 4 in der gezeichneten Ausführung durch jeweils eine Verschraubung 8 drehfest verbunden sind. Die genannten Steuerhebel 7 kragen dabei von den Recharmen 4 derart aus, dass sie bezüglich der Längsachse 42 einen Hebelarm besitzen. Mit ihren auskragenden Enden laufen die Steuerhebel 7 auf einer Kurvenbahn 9, die sich um die Rechkreiselachse 3 herum erstreckt und in Laufrichtung der Steuerhebel 7 betrachtet Steigungen und Senken besitzt, so dass die Steuerhebel 7 verschwenkt und hierdurch die Recharme 4 um ihre Längsachse 42 verdreht werden. In der gezeichneten Ausführung tragen die Steuerhebel 7 Eingriffsräder 10, mittels derer sie auf der Kurvenbahn 9 ablaufen.

Die genannte Kurvenbahn 9 ist vorteilhafterweise verstellbar an der Nabenstruktur 11, insbesondere einem Zentralrohr, befestigt, um die gewünschte Verschwenkung der Rechzinken 5 einstellen zu können. Das genannte Zentralrohr kann dabei Teil eines Antriebsgetriebes 12 sein oder mit diesem verbunden sein, welches die Antriebsbewegung des in der gezeichneten Ausführung mechanischen Antriebs in eine Umlaufbewegung der Recharme 4 um die Rechkreiselachse 3 umsetzt.

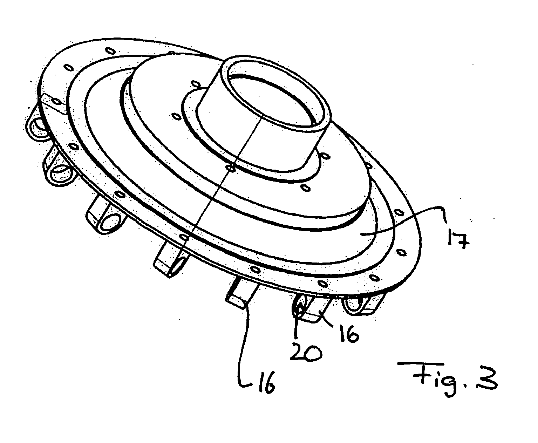

Wie Figur 2 und Figur 3 zeigen, sind die Recharme 4, die sich sternförmig von der Rechkreiselachse bzw. einem Kreisbogen hierum weg erstrecken, mittels einer Drehlagerung 13 an der vorgenannten Nabenstruktur 11 um ihre Längsachse 42 drehbar gelagert. Die Drehlagerung 13 umfasst hierbei eine äußere Lagerstelle 14 sowie eine innere Lagerstelle 15. Wie Figur 3 zeigt, umfasst die innere Lagerstelle 15 hülsen- bzw. augenförmige Lagersegmente 16, die allesamt an einem insgesamt etwa tellerförmigen Träger 17 in Form eines Lagerrings starr befestigt sind, der an dem vorgenannten Antriebsgetriebe 12 um die Rechkreiselachse 3 drehbar gelagert ist und mit einem Abtriebsrad des genannten Antriebsgetriebes 12 verbunden sein kann.

Die inneren Lagerstellen 15 sind dabei auf der weiter innen liegenden Seite der Steuerhebel 7 angeordnet, die den Rechzinken 5 des jeweiligen Recharms 4 abgewandt ist. Betrachtet man einen jeweiligen Recharm 4 von seinem äußeren Ende her in seiner Längsrichtung, liegt die innere Lagerstelle 15 also hinter dem jeweiligen Steuerhebel 7, und zwar vorteilhafterweise unmittelbar bei dem Steuerhebel 7. Wie Figur 2 zeigt, sind die Steuerhebel 7 starr mit Steuerhebel-Lagerstücken 18 verbunden, die hülsenförmig ausgebildet sind und auf die wellen- bzw. rohrförmigen Recharme 4 aufgeschoben sind. Die genannten Steuerhebel-Lagerstücke 18 sind durch die vorgenannten Verschraubungen 8 drehfest mit den Recharmen 4 verbunden. Die inneren Lagerstellen 15 können unmittelbar an diesen Steuerhebel-Lagerstücken 18 sitzen, und zwar auf einem durch die Steuerhebel-Lagerstücke 18 hindurch tretenden Recharmendabschnitt und/oder einem an das jeweilige Steuerhebel-Lagerstück 18 angeformten Drehlagerabschnitt.

Die innere Lagerstelle 15 ist dabei vorteilhafterweise mit dem Recharm 4 bzw. dem daran befestigten Steuerhebel 7 durch eine Steckverbindung verbunden, die durch Herausziehen des Recharmes 4 nach außen gelöst bzw. durch Hineinstecken von außen her in Eingriff gebracht werden kann.

Die äußeren Lagerstellen 14 für die Recharme 4 könnten grundsätzlich ebenfalls an dem tellerförmigen Träger 17 in Form des in Figur 3 gezeigten Lagerringes vorgesehen sein. Vorteilhafterweise jedoch sind die äußeren Lagerstellen 14 an einem Lagergehäuse befestigt, das mit dem vorgenannten Träger 17 in Form des in Figur 3 dargestellten Lagerringes mittels eines Flanschringes und Verschraubungen verbunden sein kann, um eine steife, kompakte Kreiseleinheit zu bilden. Die äußeren Lagerstellen 14 können dabei vorteilhafterweise lösbar ausgebildet sein, beispielsweise, wie in Figur 2 angedeutet, durch Verschraubungen 19 lösbare Lagersegmente umfassen. Hierdurch kann ein zu wartender bzw. auszutauschender Recharm ganz einfach entfernt werden dadurch, dass die äußere Lagerstelle 14 gelöst und der Recharm einfach nach außen herausgezogen wird. Hierdurch löst sich die innere Lagerstelle 15 von selbst. Durch die innenseitige Anordnung der Lagerstelle 15 braucht hierzu der Steuerhebel 7 nicht zuvor demontiert werden, sondern kann einfach mit herausgezogen werden.

## Patentansprüche

1. Heuwerbungsmaschine, insbesondere Kreiselschwader, mit zumindest einem Rechkreisel (2), der zumindest einen Recharm (4) aufweist, der um eine Rechkreiselachse (3) umlaufend antreibbar ist und um seine Längsachse (42) mittels einer Drehlagerung (13) drehbar gelagert ist, wobei mit dem Recharm (4) ein Steuerhebel (7) drehfest verbunden ist, der mit einer Kurvenbahn (9) in Eingriff bringbar ist und die Drehstellung des Recharms (4) in Abhängigkeit der Umlaufstellung des Recharms (4) um die Rechkreiselachse (3) steuert, **dadurch gekennzeichnet, dass** die Drehlagerung (13) eine innere Lagerstelle (15) auf einer in Längsrichtung des Recharms (4) betrachtet inneren Seite des Steuerhebels (7) aufweist.

2. Heuwerbungsmaschine nach dem vorhergehenden Anspruch, wobei die Drehlagerung (13) Lagerstellen (14, 15) auf beiden Seiten des Steuerhebels (7) aufweist.

3. Heuwerbungsmaschine nach einem der vorhergehenden Ansprüche, wobei die innere Lagerstelle (15) unmittelbar bei dem Steuerhebel (7) angeordnet ist.

4. Heuwerbungsmaschine nach einem der vorhergehenden Ansprüche, wobei der Steuerhebel mit einem Steuerhebel-Lagerstück (18) verbunden ist, das starr mit dem Recharm (4) verbindbar ist und einen Drehlagerabschnitt aufweist, der an der inneren Lagerstelle (15) der Drehlagerung (13) abgestützt ist.

5. Heuwerbungsmaschine nach dem vorhergehenden Anspruch, wobei das Steuerhebel-Lagerstück (18) zumindest abschnittsweise eine Hülse bildet, die den Recharm (4) umgreift.

6. Heuwerbungsmaschine nach einem der vorhergehenden Ansprüche, wobei die innere Lagerstelle (14) eine Lagerausnehmung (20) aufweist, in die ein über den Steuerhebel (7) hinausgehender innerer Endabschnitt (41) des Recharms (4) und/oder ein Steuerhebel-Lagerstückabschnitt drehbar aufgenommen ist.

7. Heuwerbungsmaschine nach einem der vorhergehenden Ansprüche, wobei die innere Lagerstelle (15) an einem tellerförmigen Träger (17) befestig ist, der um die Rechkreiselachse (3) drehbar ist, vorzugsweise an einem Antriebsgetriebegehäuse drehbar gelagert und/oder mit einem Abtriebsstück des Antriebsgetriebes verbunden ist.

8. Heuwerbungsmaschine nach einem der vorhergehenden Ansprüche, wobei der Recharm (4) mittels einer äußeren, von dem Steuerhebel (7) beabstandeten Lagerstelle (14) drehbar gelagert ist.

9. Heuwerbungsmaschine nach dem vorhergehenden Anspruch, wobei die äußere Lagerstelle (14) an einem Lagergehäuse vorgesehen ist, das um die Rechkreiselachse (3) drehbar gelagert ist.

10. Heuwerbungsmaschine nach dem vorhergehenden Anspruch, wobei das Lagergehäuse mit dem Träger (17) starr verbunden, vorzugsweise verschraubt ist.

11. Heuwerbungsmaschine nach einem der vorhergehenden Ansprüche, wobei zwischen der inneren Lagerstelle (15) einerseits und dem Recharm (4) und/oder dem Steuerhebel (7) andererseits eine lösbare Steckverbindung vorgesehen ist.

12. Heuwerbungsmaschine nach einem der vorhergehenden Ansprüche, wobei der Recharm (4) zusammen mit dem Steuerhebel (7) nach außen aus der inneren Lagerstelle (15) herausziehbar und demontierbar und/oder von außen her in die innere Lagerstelle (15) einsteckbar und montierbar ist.

13. Heuwerbungsmaschine nach einem der vorhergehenden Ansprüche, wobei die äußere Lagerstelle (14) lösbar ausgebildet ist.
